# EUROPÄISCHE PATENTSCHRIFT

(11) **EP 0 454 711 B1**
(45) Veröffentlichungstag und Bekanntmachung des Hinweises auf die Patenterteilung: **31.03.1993**
(21) Anmeldenummer: 90901750.1
(22) Anmeldetag: 17.01.1990
(51) Int. Cl.: F16K 47/02

(54) **SANITÄRES WASSERVENTIL MIT GERÄUSCHDÄMPFUNG**
SANITARY WATER VALVE WITH SILENCER
VALVE D'ECOULEMENT A BRUIT REDUIT POUR APPAREILS SANITAIRES

(30) Priorität: 21.01.1989 DE 3901731
(43) Veröffentlichungstag der Anmeldung: 06.11.1991
(73) Patentinhaber: IDEAL-STANDARD GMBH, D-53008 Bonn (DE)
(72) Erfinder: BERGMANN, Konrad, D-5560 Wittlich (DE); NIKOLAYCZIK, Hans, D-5561 Minheim (DE); THOENNES, Theodor, D-5569 Darscheid (DE)
(74) Vertreter: Müller, Karl-Ernst, Dr., Dipl.-Ing.
(86) Internationale Anmeldenummer: DE9000024
(87) Internationale Veröffentlichungsnummer: WO9008286

(56) Entgegenhaltungen:
- EP-A- 0 103 710
- CH-A- 663 994
- DE-A- 3 525 053
- DE-C- 2 626 386

## Beschreibung

Die Erfindung betrifft ein sanitäres Wasserventil mit einem aus drei übereinanderliegenden Steuerscheiben bestehenden und von einem Gehäuse umschlossenen Steuerelement, wobei die untere und die obere Steuerscheibe feststehen und die mittlere Steuerscheibe relativ zu den festen Steuerscheiben verschiebbar ist und die untere Steuerscheibe und die mittlere Steuerscheibe Durchtrittsöffnungen für das kalte und warme Wasser und die obere Steuerscheibe den Durchtrittsöffnungen in den beiden anderen Steuerscheiben zugeordnete Umlenkkammern aufweist.

Ein Wasserventil mit den gattungsgemäßen Merkmalen ist in der DE-A-35 25 053 beschrieben; dieses Wasserventil weist als Besonderheit ein aus drei Scheiben bestehendes Steuerelement auf, dessen mittlere Scheibe als bewegliche Steuerscheibe gegenüber den beiden äußeren festen Steuerscheiben relativ verschiebbar ist. Die Verschiebung der mittleren Steuerscheibe und damit die Regelung des Wasserstromes wird vorgenommen über ein Betätigungsorgan, das in die mittlere Steuerscheibe eingreift und mit dieser verbunden ist und dazu sowohl den Deckel des das Steuerelement umschließenden Gehäuses als auch die obere feststehende Steuerscheibe in jeweils einer entsprechend angeordneten Durchbrechung durchgreift.

Das aus drei Steuerscheiben bestehende Scheibenpaket bildet dabei einerseits einen Strömungsweg aus, bei dem ein Teil des in das Ventil einströmenden Wassers nach Durchtritt durch die untere Steuerscheibe umnittelbar in den Wasserraum eintritt, und andererseits den weiteren Strömungsweg, bei welchem der andere Teil des in das Ventil einströmenden Wassers die mittlere bewegliche Steuerscheibe durchströmt und über die in der oberen Steuerscheibe ausgebildeten Umlenkkammern in den Wasserraum geführt wird. Das dieser Gattung entsprechende Wasserventil weist keine Maßnahmen zur Verminderung oder Vermeidung von Strömungsgeräuschen auf.

Aus der DE-C-26 26 386 ist bei einem sanitären Wasserventil bereits ein strömungsgeräuschminderndes Element bekannt, welches als Einbauelement in die Durchströmöffnung bzw. Durchströmöffnungen der nur einen beweglichen Ventilscheibe eingesetzt ist. Diese bekannte Lösung ist aber auf ein gattungsgemäßes Wasserventil nicht übertragbar, weil nur ein Teil des Wassers durch die entsprechenden Durchtrittsöffnungen der beweglichen Steuerscheibe geführt wird, so daß die auf dem anderen Strömungsweg außerhalb der mittleren beweglichen Steuerscheibe auftretenden Strömungsgeräusche nicht erfaßt sind.

Der Erfindung liegt daher die Aufgabe zugrunde, ein sanitäres Wasserventil mit den gattungsgemäßen Merkmalen derart zu verbessern, daß das durch das gesamte das Ventil durchströmende Wasser verursachte Strömungsgeräusch vermindert bzw. vermieden ist.

Die Lösung dieser Aufgabe ergibt sich einschließlich vorteilhafter Ausgestaltungen und Weiterbildungen aus dem Inhalt der Patentansprüche.

Die Erfindung beinhaltet den Grundgedanken, daß auf dem Außenumfang der mittleren beweglichen Steuerscheibe ein strömungsgeräuschminderndes Element gehaltert ist. Hiermit ist der Vorteil verbunden, daß nunmehr beide durch die drei Steuerscheiben ausgebildeten Wasserwege von einem einzigen strömungsgeräuschmindernden Element erfaßt sind. Dieses Element ist in einfacher Weise an der mittleren Steuerscheibe zu haltern und dabei einfach herstellbar und bei der Montage des sanitären Wasserventils leicht einsetzbar.

Nach einem bevorzugten Ausführungsbeispiel der Erfindung umfaßt das Element den Außenumfang der mittleren beweglichen Steuerscheibe nur in demjenigen Abschnitt, der auch von den durch die Durchtrittsöffnungen wie die Umlenkkammern definierten Strömungswegen erfaßt ist.

Bevorzugt ist das strömungsgeräuschmindernde Element als ein der äußeren Form der mittleren beweglichen Steuerscheibe angepaßtes und hierzu vorgeformtes Siebgewebe ausgebildet, wobei die Höhe des Siebgewebeelementes der Dicke der mittleren beweglichen Steuerscheibe entspricht.

Eine zweckmäßige Halterung des Siebgewebeelementes an dem Umfang der mittleren beweglichen Steuerscheibe ergibt sich daraus, daß das Siebgewebeelement mittels einer den Umfang der mittleren beweglichen Steuerscheibe umfassenden Federklammer an der Steuerscheibe festgelegt ist.

Nach einer bevorzugten Ausführungsform der Erfindung weist das Siebgewebeelement zu den beiden Außenrändern der mittleren beweglichen Steuerscheibe gerichtete Aufwölbungen auf, wobei die Federklammer zwischen den Aufwölbungen angeordnet ist; hiermit ist die vorteilhafte Wirkung verbunden, daß das aus dem Scheibenpaket das strömungsgeräuschmindernde Element anströmende Wasser von einer vergleichsweise großen Gewebefläche erfaßt ist.

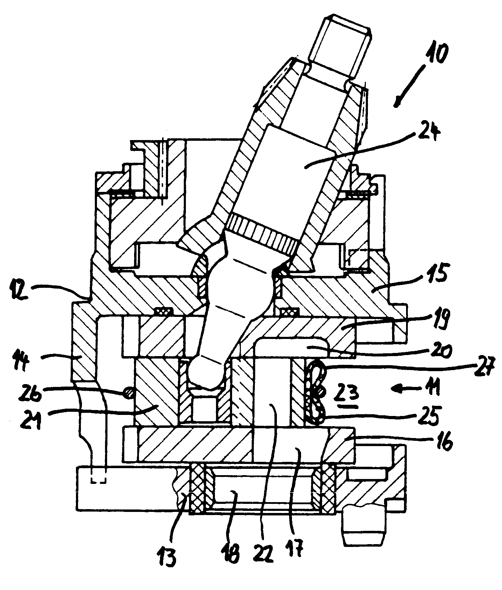

In der Zeichnung ist ein Ausführungsbeispiel der Erfindung wiedergegeben, welches nachstehend beschrieben ist. Die einzige Figur zeigt dabei ein erfindungsgemäßes sanitäres Wasserventil im Schnitt.

Das Wasserventil 10 weist als Steuerelement 11 ein aus drei einzelnen Scheiben bestehendes Scheibenpaket auf, welches von einem Gehäuse 12 mit einem Boden 13, einer Seitenwandung 14 und einem Deckel 15 umschlossen ist. Die untere Scheibe 16 des Steuerelementes 11 ist gegen den Gehäuseboden 12 festgelegt und weist Öffnungen 17 zum Durchtritt des kalten und warmen Wassers auf, welches über entsprechend zugeordnete Durchtrittsöffnungen 18 in dem Gehäuseboden 13 in das Ventil einströmt; in der Zeichnung ist jeweils nur eine Öffnung 17, 18 erkennbar.

Gegen den oberen Gehäusedeckel 15 festgelegt ist die obere Scheibe 19 des Steuerelementes 11, welche den Öffnungen 17, 18 zugeordnete Umlenkkammern 20 aufweist; zwischen den festen Scheiben 16, 19 ist die bewegliche Scheibe 21 mit entsprechend kommunizierenden Öffnungen 22 angeordnet, wie sich aus der Zeichnung ergibt. In der Zeichnung ist das Ventil in der Offenstellung dargestellt, bei welcher der rechte Rand der beweglichen Scheibe 21 gegenüber den zugeordneten Rändern der festen Scheiben 16, 19 verschoben ist, so daß das von unten her in das Wasserventil 10 einströmende Wasser über die Öffnungen 17 bzw. die Öffnungen 22 und die Umlenkkammer 20 in den Wasserraum 23 des Ventils strömen kann. Wird die bewegliche Scheibe 21 nach rechts verschoben, bis die Scheibenränder zur Deckung gelangen, ist die geschlossene Stellung des Wasserventils erreicht, in welcher die Umlenkkammern 20 ständig unter dem Druck des auf dem Ventil anstehenden Wassers stehen.

Zur Bewegung und Verschiebung der beweglichen Scheibe 21 ist ein Betätigungsorgan 24 vorgesehen, welches den Gehäusedeckel 15 und die obere feste Scheibe 19 in jeweils zugeordneten Öffnungen durchgreift und in die bewegliche Scheibe 21 eingreift, die zu diesem Zweck eine entsprechende Bohrung aufweist. Das Betätigungsorgan 24 ist dabei so in dem Gehäuse gelagert, daß sowohl eine Verdrehung des Betätigungsorgans wie auch dessen Verschwenkung die mittlere bewegliche Steuerscheibe in die jeweils zugeordnete Stellung bringt.

Im Bereich des Wasserraumes 23 ist auf dem äußeren Umfang der mittleren beweglichen Steuerscheibe 21 ein strömungsgeräuschminderndes Element 25 gehaltert, indem das vorgeformte Element 25 mittels einer die Steuerscheibe 21 auf ihrem äußeren Umfang umgreifenden Federklammer 26 an der Steuerscheibe 21 festgelegt ist. Das Element 25 ist aus Siebgewebe gefertigt und entspricht in seiner Höhe der Dicke der beweglichen Steuerscheibe 21. Die Federklammer 26 umgreift die Steuerscheibe 21 unter Einschluß des Siebgewebeelementes 25, wobei das Element 25 zu den Seitenrändern der beweglichen Steuerscheibe 21 gerichtete Aufwölbungen 27 aufweist, so daß das von den Öffnungen 17 bzw. den Umlenkkammern 20 her in den Wasserraum 23 strömende Wasser zunächst über durch die Aufwölbungen 27 vergrößerte Siebflächen geleitet wird.

In der Zeichnung ist das Siebgewebe 25 als Hohlkörper mit einem auch an dem Rand der Steuerscheibe 21 anliegenden Gewebesteg ausgebildet, so daß sich in etwa die Form eines "B" ergibt, bei welcher die Federklammer 26 von außen die Einwölbung des "8" ausbildet; alternativ kann hier aber auch auf den an dem Rand der Steuerscheibe 21 anliegenden Gewebesteg verzichtet sein, so daß die Aufwölbungen 27 mit ihren zugeordneten Außenrändern auf dem Außenrand der beweglichen Steuerscheibe 21 aufstehen, wobei sie durch die Federklammern 26 in dieser Stellung festgelegt und gehalten sind.

## Patentansprüche

1. Sanitäres Wasserventil mit einem aus drei übereinanderliegenden Steuerscheiben bestehenden und von einem Gehäuse umschlossenen Steuerelement, wobei die untere und die obere Steuerscheibe feststehen und die mittlere Steuerscheibe relativ zu den festen Steuerscheiben verschiebbar ist und die untere Steuerscheibe und die mittlere Steuerscheibe Durchtrittsöffnungen für das kalte und warme Wasser und die obere Steuerscheibe den Durchtrittsöffnungen in den beiden anderen Steuerscheiben zugeordnete Umlenkkammern aufweist, dadurch gekennzeichnet, daß auf dem Außenumfang der mittleren, beweglichen Steuerscheibe (21) ein strömungsgeräuschminderndes Element (25) gehaltert ist, welches den Außenumfang der Steuerscheibe (21) nur in dem Abschnitt des von den Umlenkkammern (20) der oberen Steuerscheibe (19) zum Wasserraum (23) des Ventils möglichen Strömungsweges umfaßt.

2. Wasserventil nach Anspruch 1, dadurch gekennzeichnet, daß das Element (25) als ein der äußeren Form der Steuerscheibe (21) angepaßtes vorgeformtes Siebgewebe ausgebildet ist.

3. Wasserventil nach Anspruch 1 oder 2, dadurch gekennzeichnet, daß die Höhe des Siebgewebeelementes (25) der Dicke der mittleren beweglichen Steuerscheibe (21) entspricht.

4. Wasserventil nach einem der Ansprüche 1 bis 3, dadurch gekennzeichnet, daß das Siebgewebeelement (25) mittels einer die mittlere bewegliche Steuerscheibe (21) an ihrem Umfang umgreifenden Federklammer (26) an dieser gehaltert ist.

5. Wasserventil nach einem der Ansprüche 1 bis 4, dadurch gekennzeichnet, daß das Siebgewebeelement (25) zu den beiden Außenrändern der mittleren beweglichen Steuerscheibe (21) gerichtete Aufwölbungen (27) aufweist, wobei die Federklammer (26) zwischen den Aufwölbungen (27) angeordnet ist.

## Claims

1. Sanitary water valve having a control element which consists of three superimposed control discs and is enclosed by a housing, the lower and the upper control disc being fixed, the central control disc being displaceable relative to the fixed control discs, the lower control disc and the central control disc having through-openings for the cold and hot water and the upper control disc having deflection chambers coordinated with the through-openings in the two other control discs, characterised in that a flow noise-diminishing element (25) is supported on the outer periphery of the central movable control disc (21) which element (25) encompasses the outer periphery of the central movable control disc (21) just in the section of the flow path extending from the deflection chambers (20) of the upper control disc (19) to the water space (23) of the valve.

2. Water valve according to claim 1, characterised in that the element (25) is formed as a pre-formed sieve netting adapted to the outer shape of the control disc (21).

3. Water valve according to claim 1 or 2, charcterised in that the height of the flow noise-diminishing element (25) corresponds to the thickness of the central movable control disc (21).

4. Water valve according to one of the claims 1 to 3, characterised in that the flow noise-diminishing element (25) is supported on the central movable control disc (21) by means of a spring clip (26) which embraces the central movable control disc (21) at its periphery.

5. Water valve according to one of the claims 1 to 4, characterised in that the flow noise-diminishing element (25) has cambers (27) which are directed to the two outer edges of the central movable control disc (21), the spring clip (26) being arranged between the cambers (27).

## Revendications

1. Robinet d'eau sanitaire comportant un élément de commande composé de trois disques de commande superposés et entouré par un carter, le disque de commande inférieur et le disque de commande supérieur étant fixes et le disque de commande médian étant déplaçable par rapport au disque de commande fixe et le disque de commande inférieur et le disque de commande médian présentant des ouvertures de passage pour l'eau froide et l'eau chaude et le disque de commande supérieur présentant des chambres de déviation associées aux ouvertures de passage ménagées dans les deux autres disques de commande, caractérisé en ce qu'en périphérie extérieure du disque de commande médian (21) mobile est maintenu un élément (25) assurant une atténuation du bruit d'écoulement, entourant la périphérie extérieure du disque de commande (21) seulement dans la section du parcours d'écoulement possible allant des chambres de déviation (20) du disque de commande supérieur (19) à l'enceinte à eau (23) du robinet.

2. Robinet d'eau selon la revendication 1, caractérisé en ce que l'élément (25) est réalisé sous forme d'un tissu formant tamis préformé, adapté à la forme extérieure du disque de commande (21).

3. Robinet d'eau selon la revendication 1 ou 2, caractérisé en ce que la hauteur de l'élément tissé formant tamis (25) correspond à l'épaisseur du disque de commande médian (21) mobile.

4. Robinet d'eau selon l'une des revendications 1 à 3, caractérisé par le fait que l'élément tissé formant tamis (25) est maintenu au moyen d'une pince élastique (26) entourant le disque de commande médian (21) mobile sur la périphérie de ce dernier.

5. Robinet d'eau selon l'une des revendications 1 à 4, caractérisé en ce que l'élément tissé formant tamis (25) présente sur les deux bords extérieurs du disque de commande médian (21) mobile des bombements orientés (27), la pince élastique (26) étant disposée entre les bombements (27).
